# EUROPÄISCHE PATENTSCHRIFT

(11) **EP 0 602 418 B1**
(45) Veröffentlichungstag und Bekanntmachung des Hinweises auf die Patenterteilung: **11.02.1998**
(21) Anmeldenummer: 93118857.7
(22) Anmeldetag: 24.11.1993
(51) Int. Cl.: B65D 77/22, B31B 1/84

(54) **Überdruckventil für Verpackungsbehälter**
Pressure relief valve for packaging container
Soupape de surpression pour récipient d'emballage

(30) Priorität: 18.12.1992 DE 4243020
(43) Veröffentlichungstag der Anmeldung: 22.06.1994
(73) Patentinhaber: ROBERT BOSCH GMBH, 70442 Stuttgart (DE)
(72) Erfinder: Buchner, Norbert, Dr. Prof.-Ing., D-71364 Winnenden (DE); Domke, Dr. Klaus, Dr.-Ing., -71254 Ditzingen (DE); Reichert, Dr. Manfred, Dipl.-Ing., D-73630 Remshalden (DE); Stotkiewitz, Herbert, Dipl.-Ing., (FH), D-74321 Bietigheim-Bissingen (DE); Wilke, Dr. Bernd, Dipl.-Ing., D-71397 Leutenbach (DE); Zimmermann, Sabine, D-70806 Kornwestheim (DE); Lemke, Kuno, D-74321 Bietigheim-Bissingen (DE); Voegele, Guenther, Dipl.-Ing. (FH), D-71101 Schoenaich (DE)

(56) Entgegenhaltungen:
- EP-A- 0 043 425
- DE-A- 2 931 850

## Beschreibung

### Stand der Technik

Die Erfindung geht aus von einem Überdruckventil für Verpackungsbehälter nach dem oberbegriff des Anspruchs 1. Ein derartiges Überdruckventil und dessen Herstellung ist aus der DE-A 29 31 850 bekannt. Die in ihrem Umriß kreisförmigen Überdruckventile sind dabei auf einem Trägerband lösbar haftend angeordnet. Nachteilig dabei ist, daS bei der Ausstanzung der Überdruckventile aus der Verbundbahn ein hoher Anteil an Abfall anfällt. Außerdem ist zur Handhabung bzw. zum Transport der Überdruckventile ein Trägerband notwendig, das die Herstellung zusätzlich verteuert. Weiterhin ist aus der EP-A 0 043 425 eine Vorrichtung zum Anbringen von Überdruckventilen an Verpackungsbehältern bekannt, bei der die auf einer Vorratsrolle angelieferten, auf dem Trägerband haftenden Überdruckventile einzeln vom Trägerband gelöst und mit ihrer mit Klebstoff beschichteten Unterseite an dem Verpackungsbehälter angebracht werden. Nachteilig dabei ist, daß das Trägerband separat gesammelt und entsorgt werden muß.

### Vorteile der Erfindung

Das erfindungsgemäße Überdruckventil mit den kennzeichnenden Merkmalen des Anspruchs 1 hat demgegenüber den Vorteil, daß durch die klebstoffabweisende Oberfläche der Abstandshaltestreifen die Überdruckventile ohne Gefahr des Zusammenklebens in Form einer Endlosreihe rollenförmig ohne Verwendung eines besonderen Trägerbandes aufgewickelt werden können. Die Überdruckventile werden den Verpackungsbehältern zugeführt, indem sie in der Verpackungsmaschine einzeln von der Rolle abgetrennt und übertragen werden. Besonders vorteilhaft ist dabei, wenn die Umrisse der Überdruckventile recht- oder sechseckig sind, so daß diese in der Verbundbahn dann direkt nebeneinander angeordnet sein können, wodurch besonders bei der rechteckigen Ausführung der Anteil an Abfall beim Heraustrennen der Überdruckventile aus der Verbundbahn ein Minimum wird.

Durch die in den Unteransprüchen 2 bis 10 aufgeführten Weiterbildungen sind Verbesserungen des im Anspruch 1 angegebenen Überdruckventils möglich.

Das Überdruckventil nach einem der Ansprüche 1 bis 10 läßt sich besonders einfach nach dem im Anspruch 11 angegebenen Verfahren herstellen, handhaben und bevorraten.

### Zeichnung

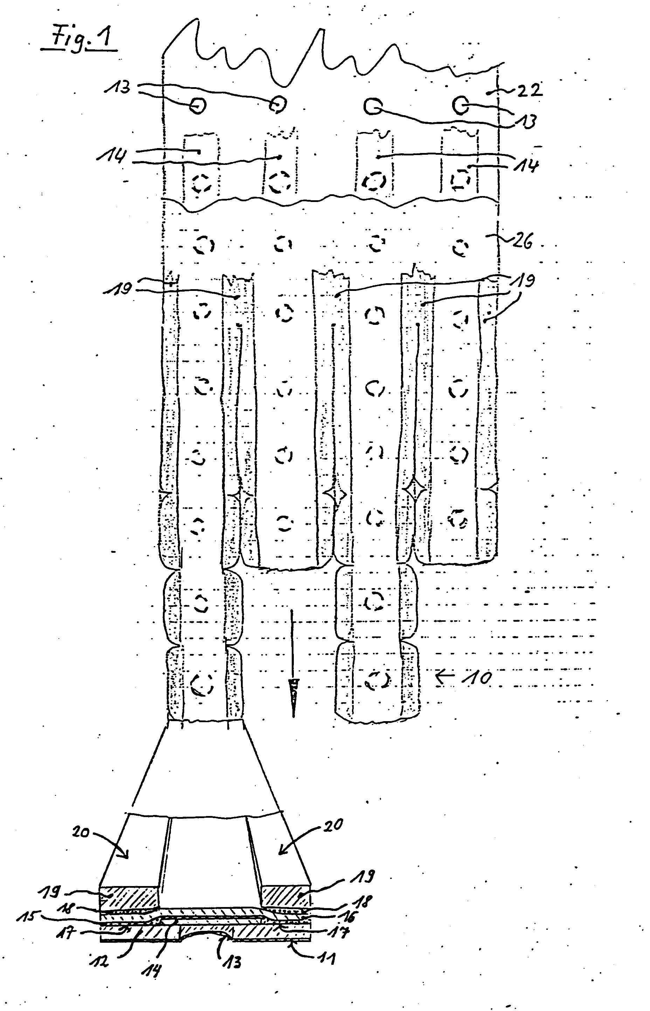

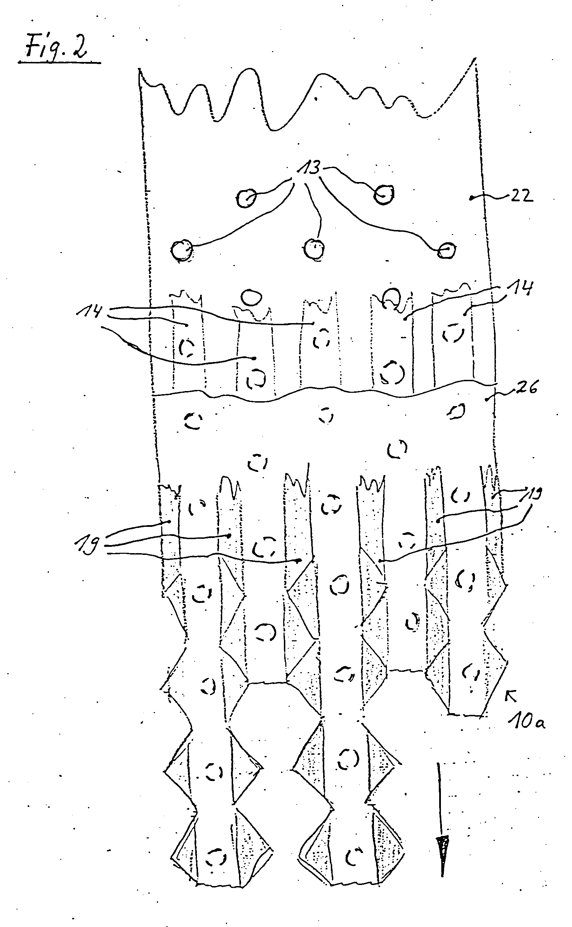

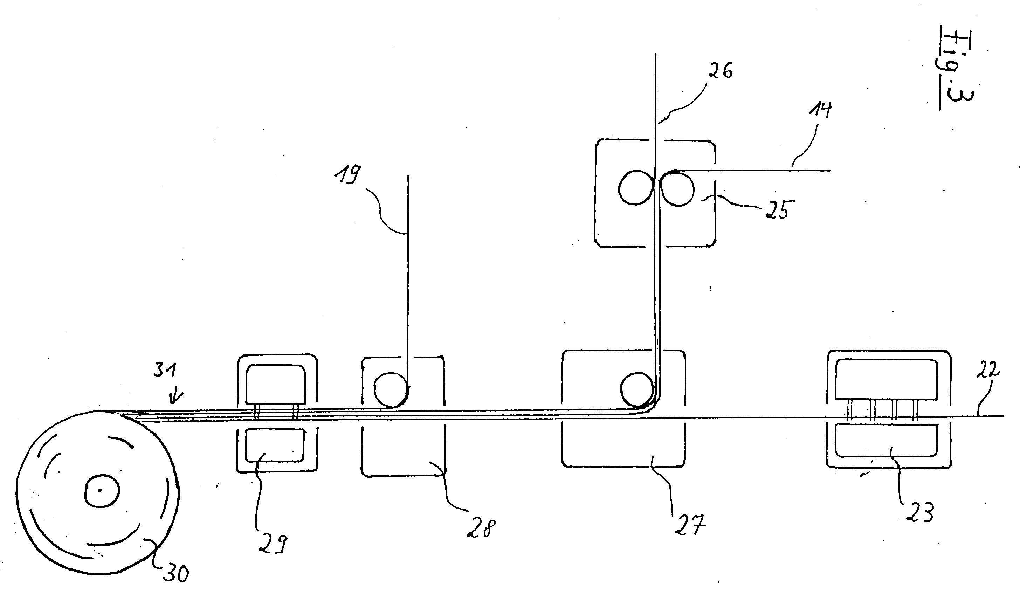

Zwei Ausführungsbeispiele der Erfindung sind in der Zeichnung dargestellt und werden in der nachfolgenden Beschreibung näher erläutert. Es zeigen Fig. 1 schematisch den Werdegang der Herstellung von Überdruckventilen, Fig. 2 den Werdegang in einer abgewandelten Form von Überdruckventilen gegenüber Fig. 1 und Fig. 3 eine Anlage zum Herstellen von Überdruckventilen.

### Beschreibung

Ein in der Fig. 1 dargestelltes Überdruckventil 10 für Verpackungsbehälter, wie z. B. für Kaffee, hat eine unterseitig mit Kleber 11 beschichtete Basis 12 mit einem Loch 13, durch das der im Verpackungsbehälter vorhandene Überdruck entweichen kann. Die Basis 12 weist insbesondere eine Stärke von 150 µm bis 250 µm auf. Ein beidseitig nicht klebender Ventilstreifen 14 mit einer Stärke von 5 µm bis 35 µm überdeckt das Loch 13 in der Basis 12 und ist an einer unterseitigen Kleberschicht 15 einer Membran 16, zwei randseitige Klebestreifen 17 freilassend, befestigt. Die die Basis 12 vollflächig deckende und mit den beiden Klebestreifen 17 auf dieser befestigten Membran 16 hat eine Stärke von 5 µm bis 35 µm. Sowohl die Basis 12 als auch der Ventilstreifen 14 und die Membran 16 bestehen dabei aus einem Material mit ein und demselben Temperaturausdehnungskoeffizienten, insbesondere Polyester. Außerdem können sowohl der Ventilstreifen 14 als auch die Membran 16 mit einer Sperrschicht, wie z.B. Siliziumoxid, Aluminiumoxid oder anderem belegt sein. Der Ventilstreifen 14 kann entfallen, wenn auf der Membran 16 lediglich zwei parallele randseitige Klebestreifen 17 angebracht sind, die eine streifenförmige mittlere Ventilzone freilassen. Auf der Membran 16 sind in Deckung mit den beiden Klebestreifen 17 der Membran 16 zwei den Ventilstreifen 14 bzw. die Ventilzone freilassende, unterseitig mit einer Kleberschicht 18 versehene Abstandshaltestreifen 19 befestigt. Die Abstandshaltestreifen 19 bestehen z.B. aus Polyester, Polyäthylen, Teflon, Silikonkarton oder Polypropylen und weisen insbesondere eine Stärke von 150 µm bis 500 µm auf. Ihre freie Oberseite 20, deren Oberfläche genarbt sein kann, ist klebstoffabweisend durch Auftragen einer dünnen Silikon- oder Teflonschicht ausgebildet. Der zum Aufbau der Überdruckventile 10, 10a verwendete Kleber ist ein nichtaushärtender Haftkleber, vorzugsweise auf Polyurethanbasis.

Die oben beschriebenen Überdruckventile 10, 10a werden auf einer in der Fig. 3 dargestellten Anlage hergestellt. In dieser werden in einen zulaufenden unterseitig mit Kleber beschichteten Basisstreifen 22 in einer Station 23 die Löcher 13 fortlaufend in gleichen Abständen gestanzt. Währenddessen werden ein beidseitig nicht klebender Ventilstreifen 14 und ein unterseitig mit einer Kleberschicht 15 versehener Membranstreifen 26 z.B. durch Walzen in einer Station 25 miteinander verbunden. Die Station 25 entfällt bei einer Ausführung der Überdruckventile 10, 10a, die keinen gesonderten Ventilstreifen 14 haben. In diesem Fall sind auf der Unterseite des Membranstreifens 26 lediglich die randseitigen parallelen, die streifenförmigen Ventilzonen freilassenden Klebestreifen 17 aufgetragen. Anschließend werden in einer Station 27 der Membranstreifen 26 mit dem Ventilstreifen 14 deckend auf den Basisstreifen 22 aufgebracht. Dann werden in einer Station 28 die unterseitig mit Kleber beschichteten Abstandshaltestreifen 19 in Deckung mit den Klebestreifen 17 des Membranstreifens 26 aufgebracht. Bei den dargestellten Ausführungsbeispielen wird mit dem oben beschriebenen Verfahren eine Verbundbahn 31 mit mehreren, beispielsweise mit vier oder fünf nebeneinander liegenden Reihen von Überdruckventilen 10, 10a hergestellt. Die so geformte Verbundbahn durchläuft danach eine Station 29, in der in wenigstens einer Reihe einstückig miteinander verbundene Überdruckventile 10, 10a aus der Verbundbahn gestanzt werden. Dabei ergibt sich ein besonders geringer Materialverbrauch, wenn, wie in Fig. 1 dargestellt, die Umrisse der Überdruckventile 10 rechteckig sind. Jedoch auch bei einem sechseckigen Umriß der Überdruckventile 10a nach Fig. 2 ergibt sich, z.B. im Vergleich mit einem runden Umriß, ein geringerer Materialverbrauch, da lediglich in den beiden Randzonen der Verbundbahn Abfall anfällt. Die so entstandenen Reihen von Überdruckventilen 10, 10a werden schließlich zu einer Rolle 30 aufgewickelt. Dabei liegt der Basisstreifen 22 mit seiner mit Kleber 11 beschichteten Unterseite auf der klebstoffabweisenden Oberseite der Abstandshaltestreifen 19. Die so gefertigten und als Rollen 30 bevorratbaren Überdruckventile 10, 10a werden zu einer Verpackungsmaschine transportiert und in dieser weiterverarbeitet, indem sie einzeln von der Rolle 30 abgetrennt und an einen Verpackungsbehälter über einem Entgasungsloch befestigt werden.

## Patentansprüche

1. Überdruckventil (10, 10a) für einen Verpackungsbehälter mit einer unterseitig mit Kleber (11) beschichteten, ein Loch (13) aufweisenden Basis (12), mit einer das Loch (13) überdeckenden, mit parallelen randseitigen Klebestreifen (17) auf der Basis (12) befestigten, eine streifenförmige Ventilzone freilassenden Membran (16), und mit zwei unterseitig mit einer Kleberschicht (18) auf der Membran (16) in Deckung mit den Klebestreifen (17) befestigten Abstandshaltestreifen (19), dadurch gekennzeichnet, daß die Abstandshaltestreifen (19) auf ihrer Oberseite (20) klebstoffabweisend sind.

2. Überdruckventil nach Anspruch 1, dadurch gekennzeichnet, daß die Abstandshaltestreifen (19) auf ihrer Oberseite (20) eine klebstoffabweisende Schicht tragen.

3. Überdruckventil nach Anspruch 1 oder 2, dadurch gekennzeichnet, daß die Abstandshaltestreifen (19) auf ihrer Oberseite (20) mit Teflon oder Silikon beschichtet sind.

4. Überdruckventil nach einem der Ansprüche 1 bis 3, dadurch gekennzeichnet, daß an der Membran (16) zwischen den beiden Klebestreifen (17) ein klebstofffreier Ventilstreifen (14) angeordnet ist.

5. Überdruckventil nach einem der Ansprüche 1 bis 4, dadurch gekennzeichnet, daß der Umriß des Überdruckventils (10) im wesentlichen rechteckig ist.

6. Überdruckventil nach einem der Ansprüche 1 bis 4, dadurch gekennzeichnet, daß der Umriß des Überdruckventils (10a) sechseckig ist.

7. Überdruckventil nach einem der Ansprüche 1 bis 6, dadurch gekennzeichnet, daß die Basis (12) aus einem Material mit demselben Temperaturausdehnungskoeffizienten wie der Ventilstreifen (14) und die Membran (16) besteht, insbesondere aus Polyester in einer Stärke von 150 µm bis 250 µm.

8. Überdruckventil nach Anspruch 4 und einem der Ansprüche 5 bis 7, dadurch gekennzeichnet, daß der Ventilstreifen (14) aus einem Material mit demselben Temperaturausdehnungskoeffizienten wie die Basis (12) und die Membran (16) besteht, insbesondere aus Polyester in einer Stärke von 5 µm bis 35 µm.

9. Überdruckventil nach einem der Ansprüche 1 bis 8, dadurch gekennzeichnet, daß die Membran (16) aus einem Material mit demselben Temperaturausdehnungskoeffizienten wie die Basis (12) und der Ventilstreifen (14) besteht, insbesondere aus Polyester in einer Stärke von 5 µm bis 35 µm.

10. Überdruckventil nach einem der Ansprüche 1 bis 9, dadurch gekennzeichnet, daß die Abstandshaltestreifen (19) aus Polyester, Polyäthylen, Teflon, Silikonkarton oder Polypropylen bestehen und insbesondere eine Stärke von 150 µm bis 500 µm aufweisen.

11. Verfahren zum Herstellen von Überdruckventilen nach Anspruch 1, bei dem zur Herstellung einer Verbundbahn (31) zunächst ein unterseitig mit Kleber (11) beschichteter Basisstreifen (22) fortlaufend gelocht wird, anschließend ein die Lochreihe überdeckender, mit parallelen randseitigen Klebestreifen (17) versehener, den Basisstreifen (22) deckender Membranstreifen (26) auf den Basisstreifen (22) aufgebracht wird, und daß dann zwei unterseitig mit Kleber (18) versehene Abstandshaltestreifen (19) in Deckung mit den Klebestreifen (17) des Membranstreifens (26) auf den Membranstreifen (26) aufgebracht werden, dadurch gekennzeichnet, daß die Oberseite (20) der Abstandshaltestreifen (19) klebstoffabweisend ist oder behandelt wird, daß die geformte Verbundbahn (31) mit der mit Kleber (11) beschichteten Unterseite des Basisstreifens (22) direkt auf der klebstoffabweisenden Oberseite (20) der Abstandshaltestreifen (19) zu einer Rolle (30) aufgewickelt wird und daß die Überdruckventile (10, 10a) in einer Reihe einstückig miteinander verbunden sind.

12. Verfahren nach Anspruch 11, dadurch gekennzeichnet, daß der Membranstreifen (26) unterseitig ganzflächig mit Kleber (15) beschichtet ist, und daß die mittlere, zwischen den Klebestreifen (17) liegende Zone mit einem beidseitig nicht klebenden Ventilstreifen (14) abgedeckt wird.

13. Verfahren nach Anspruch 11 oder 12, dadurch gekennzeichnet, daß von der Verbundbahn (31) in wenigstens einer Reihe Überdruckventile (10, 10a) nacheinander abgetrennt werden.

14. Zu einer Rolle (30) aufgewickelte, zusammenhängende plattenförmige Überdruckventile (10, 10a) nach Anspruch 1, dadurch gekennzeichnet, daß der Basisstreifen (22) mit seiner mit Kleber (11) beschichteten Unterseite auf der klebstoffabweisenden Oberseite (20) der Abstandshaltestreifen (19) aufliegt.

## Claims

1. Pressure relief valve (10, 10a) for a packaging container, with a base (12) coated on the underside with adhesive (11) and having a hole (13), with a membrane (16) which covers the hole (13) and is fastened to the base (12) by means of parallel adhesive edge strips (17) and which leaves free a strip-like valve zone, and with two spacer strips (19) fastened on the underside to the membrane (16) by means of an adhesive layer (18) so as to overlap the adhesive strips (17), characterized in that the spacer strips (19) are adhesive-repellent on their top side (20).

2. Pressure relief valve according to Claim 1, characterized in that the spacer strips (19) carry an adhesive-repellent layer on their top side (20).

3. Pressure relief valve according to Claim 1 or 2, characterized in that the spacer strips (19) are coated on their top side (20) with Teflon or silicone.

4. Pressure relief valve according to one of claims 1 to 3, characterized in that an adhesive-free valve strip (14) is arranged on the membrane (16) between the two adhesive strips (17).

5. Pressure relief valve according to one of Claims 1 to 4, characterized in that the contour of the pressure relief valve (10) is essentially rectangular.

6. Pressure relief valve according to one of Claims 1 to 4, characterized in that the contour of the pressure relief valve (10a) is hexagonal.

7. Pressure relief valve according to one of Claims 1 to 6, characterized in that the base (12) consists of a material having the same coefficient of thermal expansion as the valve strip (14) and the membrane (16), in particular of polyester in a thickness of 150 µm to 250 µm.

8. Pressure relief valve according to Claim 4 and one of Claims 5 to 7, characterized in that the valve strip (14) consists of a material having the same coefficient of thermal expansion as the base (12) and the membrane (16), in particular of polyester in a thickness of 5 µm to 35 µm.

9. Pressure relief valve according to one of Claims 1 to 8, characterized in that the membrane (16) consists of a material having the same coefficient of thermal expansion as the base (12) and the valve strip (14), in particular of polyester in a thickness of 5 µm to 35 µm.

10. Pressure relief valve according to one of Claims 1 to 9, characterized in that the spacer strips (19) consist of polyester, polyethylene, Teflon, silicone-treated cardboard or polypropylene and, in particular, have a thickness of 150 µm to 500 µm.

11. Method for the production of pressure relief valves according to Claim 1, in which, in order to produce a composite web (31), first a base strip (22) coated on the underside with adhesive (11) is continuously perforated, and subsequently a membrane strip (26), which covers the row of holes and is provided with parallel adhesive edge strips (17) and which overlaps the base strip (22), is applied to the base strip (22), and in that, then, two spacer strips (19) provided on the underside with adhesive (18) are applied to the membrane strip (26) so as to overlap the adhesive strips (17) of the membrane strip (26), characterized in that the top side (20) of the spacer strips (19) is or is treated so as to be adhesive-repellent, in that the composite web (31) formed is wound up to form a roll (30), with the underside of the base strip (22) coated with adhesive (11) being directly on the adhesiverepellent top side (20) of the spacer strips (19), and in that the pressure relief valves (10, 10a) are integrally connected to one another in a row.

12. Method according to Claim 11, characterized in that the membrane strip (26) is coated on the underside with adhesive (15) over the entire area, and in that the middle zone lying between the adhesive strips (17) is covered with a valve strip (14) which is non-adhesive on both sides.

13. Method according to Claim 11 or 12, characterized in that pressure relief valves (10, 10a) are successively detached from the composite web (31) in at least one row.

14. Interconnected plate-shaped pressure relief valves (10, 10a) according to Claim 1 which are wound up to form a roll (30), characterized in that the base strip (22) rests with its underside coated with adhesive (11) on the adhesive-repellent top side (20) of the spacer strips (19).

## Revendications

1. Soupape de surpression (10, 10a) pour un récipient d'emballage comportant une base (12) dont la face inférieure est revêtue de colle (11), et qui comporte un trou (13), une membrane (16) recouvrant le trou (13), ayant des bandes de colle (17) parallèles aux bords, fixées sur la base (12), et laissant libre une zone de soupape en forme de bande, ainsi que de deux bandes d'écartement (19), fixées par leur face inférieure avec une couche de colle (18) sur la membrane (16), en concordance avec les bandes de colle (17),
caractérisée en ce que
les bandes d'écartement (19) ont une face supérieure (20) anti-adhérente.

2. Soupape de surpression selon la revendication 1,
caractérisée en ce que
les bandes d'écartement (19) portent sur leur face supérieure (20) une couche anti-adhérente.

3. Soupape de surpression selon l'une quelconque des revendications 1 ou 2,
caractérisée en ce que
les bandes d'écartement (19) sont revêtues d'une couche de Téflon ou de silicone sur leur face supérieure (20).

4. Soupape de surpression selon l'une des revendications 1 à 3,
caractérisée en ce que
la membrane (16) comporte une bande de soupape (14), sans colle entre les deux bandes de colle (15).

5. Soupape de surpression selon l'une des revendications 1 à 4,
caractérisée en ce que
le contour de la soupape de surpression (10) est principalement rectangulaire.

6. Soupape de surpression selon l'une des revendications 1 à 4,
caractérisée en ce que
le contour de la soupape de surpression (10a) est hexagonal.

7. Soupape de surpression selon l'une des revendications 1 à 6,
caractérisée en ce que
la base (12) est en une matière ayant le même coefficient de dilatation thermique que la bande de soupape (14) et la membrane (16) est notamment en polyester d'une épaisseur comprise entre 150 µm et 250 µm.

8. Soupape de surpression selon l'une des revendications 4 et 5 à 7,
caractérisée en ce que
la bande de soupape (14) est en une matière ayant le même coefficient de dilatation thermique que la base (12) et la membrane (16) est notamment en polyester d'une épaisseur comprise entre 5 µm et 35 µm.

9. Soupape de surpression selon l'une des revendications 1 à 8,
caractérisée en ce que
la membrane (16) est en une matière ayant le même coefficient de dilatation thermique que la base (12) et d'une bande formant soupape (14), notamment en polyester d'une épaisseur comprise entre 5 µm et 35 µm.

10. Soupape de surpression selon l'une des revendications 1 à 9,
caractérisée en ce que
les bandes d'écartement (19) sont en polyester, polyéthylène, Téflon, carton siliconé ou polypropylène et ont une épaisseur notamment comprise entre 150 µm et 500 µm.

11. Procédé de fabrication de soupape de surpression selon la revendication 1, selon lequel, pour fabriquer une bande composite (31), on perfore tout d'abord en continu, une bande de base (22) dont la face inférieure est revêtue de colle (11), puis on applique sur la bande de base (22), une bande formant membrane (26), recouvrant la rangée de trous, ayant des bandes de colle (17) à bord parallèle, sur la bande de base (22), puis on applique sur la bande (26) deux bandes d'écartement (19) à face inférieure munie de colle (18), en recouvrant les bandes de colle (17) de la bande (26),
caractérisée en ce que
la face supérieure (20) de la bande d'écartement (19) est anti-adhérente ou est traitée pour être anti-adhérente et la bande composite mise en forme (31) est enroulée par un rouleau (30) avec la face inférieure revêtue de colle (11) de la bande de base (22), directement sur la face supérieure (20) anti-adhérente de la bande (19) et les soupapes de surpression (10, 10a) sont reliées en série en une seule pièce.

12. Procédé selon la revendication 11,
caractérisé en ce que
la bande formant membrane (26) est revêtue sur sa face inférieure, sur toute sa surface de colle (15) et la zone médiane, située entre les bandes de colle (17) est recouverte d'une bande formant soupape (14) dont les deux faces sont anti-adhérentes

13. Procédé selon la revendication 11 ou 12,
caractérisé en ce qu'
on sépare au moins une série de soupapes de surpression (10, 10a) successivement de la bande composite (31).

14. Soupapes de surpression (10, 10a), en forme de plaque, réunies, enroulées sur un rouleau (30) selon la revendication 1,
caractérisées en ce que
la bande de base (22) est appliquée avec sa face inférieure revêtue de colle (11) sur la face supérieure (20) antiadhérente de la bande d'écartement (19).
